# EUROPEAN PATENT SPECIFICATION

(11) **EP 3 375 562 B1**
(45) Date of publication and mention of the grant of the patent: **10.05.2023**
(21) Application number: 17161276.5
(22) Date of filing: 16.03.2017
(51) Int. Cl.: B23P 15/34, B22F 5/10, B22F 7/06, B23P 15/28, B23C 5/28, B22F 5/00

(54) **METHOD OF PRODUCING A BLANK FOR A SHAFT MILLING TOOL AND SUCH A BLANK**
VERFAHREN ZUR HERSTELLUNG EINES ROHLINGS FÜR EIN SCHAFTFRÄSWERKZEUG UND EIN SOLCHER ROHLING
MÉTHODE DE PRODUCTION D'UNE ÉBAUCHE POUR UN OUTIL DE FRAISAGE À ARBRE ET UNE TELLE ÉBAUCHE

(43) Date of publication of application: 19.09.2018
(73) Proprietor: WALTER AG, 72072 Tübingen (DE)
(72) Inventor: GIESSLER, Josef, DE-77796 Mühlenbach (DE)
(74) Representative: Sandvik

(56) References cited:
- WO-A1-2015/136331
- WO-A2-2005/037484
- DE-A1-102012 001 732
- DE-U1- 20 101 101
- KR-A- 20100 113 833
- US-A1- 2016 297 042

## Description

### TECHNICAL FIELD

The present disclosure is directed to a method of producing a blank for a shaft milling tool, the blank comprising a generally cylindrical body of solid carbide. Further, this disclosure is also directed to a corresponding blank as such. Typically, such blank has generally cylindrical shape including a rear portion and a front portion adjacent thereto, the front portion being defined as that portion of the blank, in the periphery of which chip flutes are to be formed.

### PRIOR ART

Prior art blanks of the above-mentioned kind are formed as solid green bodies. If the green body is formed by means of extrusion, an axially extending inner channel (in the following "axial channel") for a cooling/lubricating fluid may already be formed during extrusion of the green body. The axial channel may also be drilled into the green body after the latter has been formed and compressed. Alternatively the axial channel may be formed into the finally sintered solid carbide body, for instance by means of electro erosion.

WO2015/136 331 discloses a rotary cutting tool and a method of producing such tool among others from a sintered shaft and a sintered cutting portion which are sintered or fused together, wherein two substantially axially extending channels in both, the shaft portion as well as in the cutting portion are properly aligned at the joint of the two members. Regarding the connection between individual green bodies or sintered bodies by sintering or fusing the bodies together to form a unitary body, the present invention refers to the corresponding disclosure of WO2015/136 331 A1.

DE 10 2012 001 732 discloses a method according to the preamble of claim 1 and a blank according to the preamble of claim 13, in particular it discloses a method for producing an axially extending tool head comprising providing two preforms. The two preforms are connected to each other in a connection zone which connection zone comprises connecting surfaces perpendicular to the axial extension. One of the preforms is provided with a central distribution chamber in the connecting surface thereof.

Radially extending channels may as well be drilled into a green body of solid carbide material. A radial channel may also be drilled or formed by electro erosion into the finally sintered body from the peripheral surface of the blank such as to be in fluid communication with an axial channel. The radial channel(s) may be formed even after chip flutes or more generally chip spaces have been formed into the periphery of the green body blank or the sintered blank. With the known methods any axial channels are formed from the outer periphery of the tool along a straight path substantially in a radial direction towards an inner axial channel to get in fluid communication therewith.

A corresponding shaft milling tool comprising an axial channel and radial channels extending from the axial channel towards the bottom of chip flutes of the shaft milling tool, is known from RU 2 507 038 C1. The radial channel formed into a prior art blank thus extends straight from an inner axial channel to the periphery of the tool, has a circular cross section (since it is produced by drilling) and is open towards the periphery, typically the bottom of a chip flute. In this context, the term "periphery" includes the surface of any already prepared chip flutes.

For any particular shaft milling tool of solid carbide and also according to the present invention, a corresponding blank is formed as a so called green body consisting of a mixture of hard metal powder, in particular a carbide such as WC, and a binder phase, such as Cobalt.

The radial channels are generally provided for emitting a stream of cooling and/or lubricating fluid towards a peripheral cutting edge. This means that each channel must exit at a desired position, somewhere in the bottom of a chip flute. The radial channels can only be formed once the design of the final tool, in particular the number and position of chip flutes, is determined. Different shaft milling tools are distinguished from each other not only by their lengths and diameters, but also by the number, width and pitch of chip flutes or any other type of chip spaces. The corresponding blanks are thus customized for each individual type of milling cutter. This requires a correspondingly large number of different blanks in order to cover a corresponding number of different milling tools.

The present invention strives for improvements in the above methods of the blank production such that blanks and corresponding tools can be produced in a more efficient and more economic way.

A further aspect is that an improved cooling efficiency of a tool produced with a method according to the present invention may be obtained when compared to prior art tools produced with conventional methods. In particular, the direction of the cooling liquid ejected from the generally radially extending channels should not be restricted to straight direction from any inner axial channel, in order to obtain a more efficient cooling/lubrication of the peripheral cutting edges and adjacent rake surfaces.

According to the present invention, in accordance with claim 1, the method of producing a blank for a shaft milling tool comprising a generally cylindrical body of solid carbide, wherein the blank has a rear portion and a front portion, in the periphery of which front portion chip flutes are to be formed, comprises the following features:
a) providing a first green body including the rear portion and a first part of the front portion axially adjacent the rear portion, the first green body having at least one axially extending inner channel extending at least through the first part of the front portion;
b) providing a second green body including a second part of the front portion axially adjacent the first part;
c) said first and second parts of the first portion each comprising a connecting surface defining a common interface;
d) forming at least one generally radially extending channel (4) in at least one of the said connecting surfaces (15, 16), said channel (4) having a radially inner end configured for fluid communication with said axial channel (9), the radial channel (4) extending towards the periphery of the tool up to a radial position corresponding to at least 40% of the outer radius (R) of the blank, wherein the radial channel is formed such as to extend along a not straight path including at least one angled or curved section;
e) optionally pre-sintering the first and second green body prior to step d)
f) sintering the first green or pre-sintered body and said second green or presintered body together to form a unitary blank of sintered carbide;

Preferred embodiments of the present invention are provided by the dependent claims.

Regarding the terms "radial channel" and/or "generally radially extending channel", it may be noted that this applies to any such channel having a substantial radial component and extension such that the bottom of at least one chip flute to be formed in the periphery of the blank will intersect such at least one radial channel. According to the present invention, the core radius of the final tool is assumed to be at least 40% of the outer radius of the blank such that the radial channel extending to a radial position corresponding to at least 40% of the outer radius of the blank may intersect the bottom of an appropriately positioned chip groove.

According to one embodiment, the radial extension of the radial channel, i. e the radial outer end of the channel, is arranged at a position between 40% and 99% of the outer radius of the blank. According to another embodiment, the channel extends up to the periphery of the blank and thus intersects the peripheral surface.

While the optional pre-sintering step requires some more efforts upon forming the radial channel(s) into at least one of the connecting surfaces, it has the additional advantage that the first and second green bodies may have a different composition of materials but may still be sintered together as a unitary blank body.

For the purpose of this description, also the pre-sintered green bodies, as long as not sintered together to form a unitary blank body, shall be encompassed by the term "green body". Further, the term "sintering together to form a unitary body" refers to fitting the bodies together at their connecting surfaces and includes the heating of the bodies to a temperature sufficient for obtaining a tight and rigid joint, for instance by mutual diffusion of particles. This would also include fusion by heating the bodies close to or up to the melting point of at least one component of the body material.

In the present description, the term "chip flute" shall cover any recess adjacent a cutting edge of the final tool and the bottom of the chip flute includes at least a part of the rake face of said cutting edge.

In as far as blanks including radial channels are produced by any prior art method, such channels must necessarily extend to the periphery of the blank, because the radial channels are always formed into the already prepared cylindrical body from the periphery thereof. Moreover, any radial channels in prior art tools are always straight channels because they are formed by drilling or electro erosion from the periphery of a blank or sintered tool and drilled towards an inner axial channel, wherein in case of a tool or blank already formed with chip flutes, the term "periphery" also includes the bottom of the chip flutes, while for the blanks without chip flutes the term "periphery" generally refers to the cylindrical outer surface, i. e. the envelope surface of the blank.

According to the present invention, it is not necessary (even though possible) to have the radially extending channels extending up to the periphery of the blank. Rather, it is sufficient to have the radial channels extending to a radial position beyond the core diameter of the final tool such that the channel would intersect the bottom of an appropriately positioned chip flute. In contrast to the prior art methods, the method according to the present invention provides the formation of radial channels within connecting surfaces having a radial extension up to the periphery of the blank and before the same are sintered together.

In the above-cited RU 2 507 038 C1, the respective channels are extending exactly along a radial direction, wherein some of the channels may also have a small axial component. This limits the options for directing the stream of fluid from the channel exit opening towards the rake face adjacent a peripheral cutting edge. It is generally difficult if not impossible to have the fluid ejected from such straight radial channels being directed towards the cutting edge and the associated rake face, because upon drilling along a radial direction, the drill used for that purpose would interfere with the respective cutting edge if the extension of the channel is to be directed towards the cutting edge.

A radial channel or generally radially extending channel is formed with at least one angled or curved section and may thus easily be given a circumferential component but would still exit in the bottom of a chip flute in the final tool. In particular, since the radial channels may be formed by milling or pressing a groove in said connecting surfaces, they can easily be formed with some circumferential component in addition to their general radial extension when starting from an axial channel. The circumferential component allows a proper adjustment of the direction of the stream of cooling/flushing fluid emanating from the radial channel such as to be directed towards the adjacent cutting edge and the rake face adjoining said cutting edge or wherever cooling and/or lubricating is most desired.

Depending on the particular shape of the interface between the first and second green body, the channel may also have some axial component, for instance if the connecting surfaces of the interface are formed as conical surfaces having about the same cone angle.

The axial channel may be provided along the tool axis. Accordingly, a channel milled into a connecting surface may start with a straight radial direction and may then follow a curved path towards the position of the bottom of a chip flute which is yet to be formed. Once the chip flute is formed, the corresponding radial channel having an additional circumferential component will exit in the bottom of such chip flute aiming either towards the cutting edge associated with the chip flute or towards the rake face adjacent said cutting edge, wherein also the stream emitted from such channel has a radial and a circumferential component so that the fluid ejected from the channel will more effectively cool the rake face and the associated cutting edge.

Once the radial channels are formed into one or both of the connecting surfaces, the connecting surfaces are fitted and sintered together. Apart from the channels formed in at least one of the connecting surfaces, these surfaces should have the same shape so that they may get into a full surface abutting contact with each other.

In one embodiment, the axially extending channel is extending along and includes the axis of the blank which axis is defined as the axis of the cylindrical body. The axial channel may also be offset from the axis of the blank and/or may follow a spiral path and be provided as a pair of twisted axial channels.

The provision of the radial channels in the interface between adjacent portions of the green body which may be sintered together in order to form a unitary sintered solid carbide body, allows to give the channels any desired course in said connecting surface starting from any axially extending channel to any radial outer position which may or may not fall into the volume provided for the formation of chip flutes.

According to one embodiment, the radial extension of the channels does not have to reach the outer periphery of the green body. Rather, it is sufficient if the radial extension of the channels is up to the typical depth or volume of chip flutes of shaft milling cutters to be finally produced from the present blanks.

According to another aspect, the present disclosure also allows to produce blanks for shaft milling cutters having radially extending channels exiting at different axial levels. In order to produce a corresponding blank, the method according to independent claim 1 of the present invention is further modified by
f) providing the second green body with a third connecting surface on the side facing away from the first portion of the green body
g) providing an optionally pre-sintered third green body including a third part of the front portion axially adjacent the second part and having a fourth connecting surface facing towards the second green body,
h) the third and fourth connecting surfaces forming a common interface when fitted together,
d1) forming at least one generally radially extending channel in at least one of the third and fourth connecting surfaces, said channel having a radially inner end configured for fluid communication with said axial channel, the radial channel (4) extending towards the periphery of the tool at least up to a radial position corresponding 40% of the outer radius (R) of the blank,.
e1) sintering the first, second and third green or pre-sintered bodies together to form a unitary blank of sintered carbide.

With such an embodiment, the respective radially extending channels could be provided at two axially separated interfaces, namely between the first and the second green body and between the second and the third green body.

In one embodiment, the interfaces between the green bodies are arranged in planes perpendicular to the axis defined by the cylindrical body.

According to another embodiment, the respective interfaces may be conical surfaces with a cone angle measured between the central axis and a gradient along the conical surface in the range of 45° to 90° (wherein 90° would be a radial plane). More general the mutually fitting connecting surfaces could have any rotationally symmetric shape as for instance generated by a line or curve extending from the axis to the periphery of the blank when rotating about the axis of the blank. Examples would be a part of a spherical surface and a part of the surface of an ellipsoid. The respective surfaces should have a mating design such as to be fitted together in a flush surface abutment.

In one embodiment the connecting surfaces are contiguous uninterrupted faces except for the central channel and before forming the radial channels therein. I. e. they are substantially smooth without projections and have surface contact over their total area (except where the central and radial channels are located). In another embodiment, one or both connecting surfaces may still have a projection or recess in one connecting surface and a correspondingly fitting recess or projection in the other oppositely arranged connecting surface, which again provides a full, uninterrupted surface contact over the whole area of the connecting surfaces with the exception of the position of the axial and radial channels.

A conical or a non planar, rotationally symmetric shape of the interface may give the stream of flushing fluid ejected from the end of the respective radial channels a corresponding axial component, while simultaneously the areas of conical or non planar rotationally symmetric surfaces to be sintered together and comprising the respective channels would be larger than the area of the circular surfaces in a corresponding radial plane. This would give the finished tools a better stability.

In one embodiment the at least one radial channel may follow a spiral path, i. e. from an axial channel radially outward along a partly or continuously curved line. The end portion of such radial and curved channel could then be given an orientation having both, a radial and a circumferential (or tangential) component.

In one embodiment, the channel is formed into only one of the connecting surfaces forming the common interface. Thereby the radial channel will have a non circular cross section. In particular one substantially planar side wall delimiting the channel may then be formed by one of the connecting surfaces in which no corresponding groove or channel is formed. The resulting cross section of the channel might be semicircular, semielliptical or have any other shape of a groove formed into one of the connecting surfaces, while the open side of such groove is covered by a more or less planar wall of the other connecting surface in order to form the closed radial channel. Forming the channel or groove in only one of the connecting surfaces reduces the amount of efforts and cost upon handling the individual green bodies, in particular once the green bodies have been pre-sintered before forming the radial channel or groove therein.

In one embodiment, the at least one radial channel is not extending to the periphery of the blank, thereby forming a blind hole. However such channel will be opened by forming corresponding chip flutes into the periphery of the blank at a position to which the blind hole extends. The angular position of the chip flutes can be properly selected to have the at least one radial channel exiting in the chip flute at any desired position, which is considered to be suitable for directing the stream of the flushing fluid or liquid from the exit opening of the channel to the respective cutting edge and the rake face associated therewith. The number of radially extending channels can be properly selected in order to be suitable for different milling cutters having either two, three, four or more chip flutes.

With such an embodiment and since the radial outer end of the at least one radial channel does not extend to and thus not exit in the periphery of the front portion, the sintered blank is effectively provided with at least one or several radial channels formed as blind holes extending from an axial channel and ending before reaching the periphery of the front portion, which front portion is designed to form the cutting portion of the final shaft mill. However, the radial extension of the at least one radial channel is sufficient such that the channel will be radially opened by forming a chip flute at a proper angular position and thereby intersect the radial channel. The exact position and course of the radial channels may be properly marked for instance on the rear end of the shaft, while the axial position will be previously determined and may also be indicated at the rear end of the shaft. This allows the appropriate positioning of the tool forming the chip flutes, such that the radial channels exit at a desired position of the chip flutes

Depending on the exact angular or circumferential position of the radial channels originally formed as blind holes and depending on the circumferential position of chip flutes, all or only a part of the radial channels will be intersected by a chip flute such that the respective radial channel(s) exit(s) at a desired position in the bottom of a chip flute while the total number of radial channels formed as blind holes may be larger than the total number of chip flutes formed in the shaft milling tool so that some of the radial channels may remain as blind holes with their dead ends arranged at a circumferential position where a web portion remains between adjacent chip flutes. Depending on the circumferential spacing between adjacent radial channels, it may also be that two radial channels exit at some distance in the bottom of the same chip flute.

Such a blank is usable for a larger number of different shaft milling cutters, such as shaft milling cutters having a different number of chip flutes.

The axis of the blank and of the final tool is defined by the cylindrical shape of the envelope of the rear and front portions of the tool.

In particular, a blank having for instance eight radial channels arranged at equal angular distances could be provided with eight chip flutes each having one of the eight radial channel exiting in the concave bottom surface delimiting the chip flute. Alternatively, the blank could be provided with only four chip flutes wherein only four (i. e. every second) of the radial channels would be used and exit in the concave bottom surfaces of the chip flutes. In another alternative embodiment, four chip flutes might be arranged and formed with a sufficient width such that even two channels exit in the bottom of the chip flute.

In a similar manner, six radial channels could be provided in a blank for milling tools which may either be used for tools having three or six chip flutes.

The radial outer end of the respective radial channels is in one embodiment arranged at a distance from a central axis which is from between 40% and 80% of the total body radius. In another embodiment, the radial outer end is arranged at a distance from the central axis which is between 60% and 70% of the body radius.

It should be noted, that the number of radial channels to be formed does not depend on any limited radial extension of the radial channels and will be selected only on basis of the intended final design and use of the shaft milling cutter.

In another alternative embodiment, there may be provided two separate axially extending channels, each of which is connected to a different group of radially extending channels. This would for instance be an option for an embodiment in which radial channels are provided in two different axial positions, wherein the radial channels in the first axial position could be supplied with cooling fluid from one of the two separate axial channels while the remaining channels are supplied from the other of the two separate axial channels.

In another embodiment, the radial channels might alternatingly be connected to one or the other of said separate axially extending channels.

According to a further embodiment, the angular or circumferential position of the respective radially extending channels may be marked on an outer surface of the blank, in particular for an embodiment having radial channels not extending up to the periphery of the blank, the pattern and orientation of the respective channels may be marked on the rear surface or on the front surface of the blank which allows a proper positioning of the chip flutes to be selected without any substantial efforts for determining the position of the flutes.

A blank according to the present invention is defined in claim 13, wherein the at least one radially extending channel (4) runs along a not straight path including at least one angled or curved section. Such a channel may not be obtained by any prior art method of production and distinguishes the blank from any prior art blank.

Another distinguishing feature of the blank as such may be the non circular cross sectional shape of the at least one radial channel, which necessarily results if the channel is formed in only one of the connecting surfaces before sintering the connecting surfaces together.

The invention, advantages thereof and specific features will be further disclosed and understood by means of the following description of specific embodiments which are to be read in connection with the figures.
Figure 1 is a schematic longitudinal section through a first embodiment of a blank for a shaft milling tool according to the present invention.
Figure 2 is another schematic longitudinal section through a second embodiment of a blank according to the present invention.
Figure 3 is a view on a cross-section of the first and second embodiments, taken along the section lines X-X and Y-Y, respectively, in figures 1 and 2.
Figure 4 is a view on a cross-section of the first and second embodiments, taken along the section lines X-X and Y-Y, respectively, in figures 5a-d,
Figure 5 a - d show embodiments consisting of different numbers of green bodies and including radial channels in different axial positions.

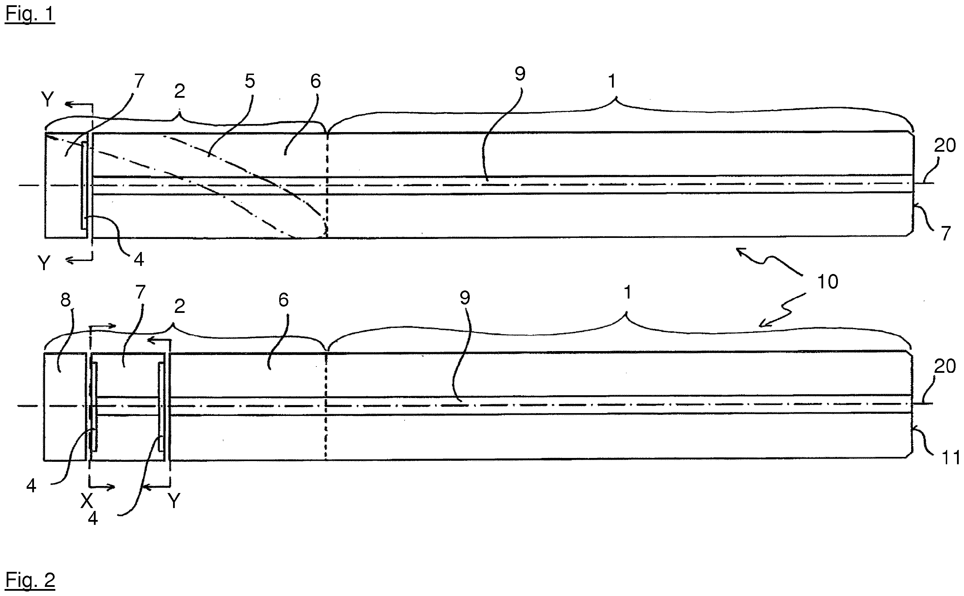

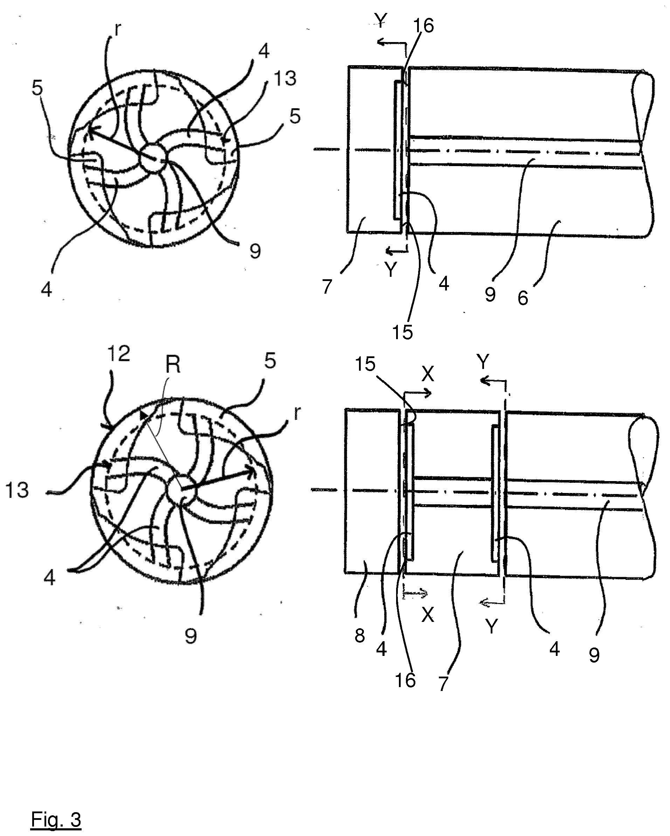

Figure 1 is a schematic representation of the longitudinal section of the blank 10 of a shaft milling cutter, which is generally formed as a solid cylindrical body, which consists of a rear portion 1 and a front portion 2. As a green body viewed from the outside, the front portion 2 and the rear portion 1 are not distinguished in any way except for the fact that the front part 2 may comprise a centering tip (not shown) for handling the blank. The blank may also comprise exit openings of the radial channels, but the channels might even be formed as blind holes with dead ends 13 (cf. fig. 3) and would then not be visible.

The front part 2 is that part of the blank 10, into which later on some chip flutes 5 may be formed one of which is shown in phantom in figure 1 by a dashed-dotted line. The front portion 2 in turn is formed of two members, namely a first part 6 adjacent the rear portion 1 and integrally formed therewith and a second part 7 adjacent the front end of the first part.

In the figure 2 embodiment, there is also provided a first part 6 of the front portion 2 as well as a second part 7, axially adjacent thereto, but in addition, there is even provided a third part 8 axially adjacent the second part 7. Any chip flute 5 is not yet provided in the blank.

A central channel 9 extends from the rear end face 11 along the axis 20 of the blank while in both embodiments of figure 1 and 2 radially extending channels 4 are provided which, however, do not reach the periphery of the tool but are rather formed as blind holes with dead ends 13 at a radius which is smaller than the outer radius of the blank.. This may be even better seen in figure 3 showing cross-sectional views of both, the first and second embodiment according to cutting lines X-X and Y-Y, respectively, in figures 1 and 2 wherein the cross sectional view along the arrows X-X is a mirror image of the cross sectional view along arrows Y-Y.

Even though not visible in the figures, for any embodiment in which the channels do not extend to the periphery of the blank, and are thus not visible on the outer periphery 12 of the blank 10, the rear end face 11 of the blank may be provided with an indication of the position and course of the radial channels 4 at the respective interface(s). This would render it easier to select a proper circumferential position of the chip flutes 5.

Upon production of the blank, the rear portion 1 is unitary formed together with the first part 6 of the front portion 2, while the second part 7 of the first portion 2 is formed as a separate member. In a similar way, in the embodiment of figure 2, a first unitary green body is formed of the rear portion 1 and a first part 6 of the front portion 2, while a second green body 7 and a third green body 8 are separately formed.

Once the corresponding, basically cylindrical first and second (and optionally third) green bodies have been formed, they may or may not be pre-sintered, and grooves 4 will be formed into at least one of the connecting surfaces 15, 16, preferably by milling or grinding of the connecting surfaces.

Alternatively, in the actual green body state, the radial channels may also be pressed into the respective connecting surface(s) of the green body (bodies), in particular during the press forming step of the green body.

Figure 3 shows two different cross sections of the interfaces from opposite directions X-X and Y-Y, respectively, which are mirror images of each other. In addition, the front portions of the blanks of figures 1 and 2 are shown in order to identify the position and orientation of the respective cross sectional views.

According to figure 3, the grooves 4 are running along a more or less spiral path so that they do not extend exactly radially from the central channel 9 but have both, a radial and a circumferential component. As can further be seen from figure 3, all channels 4 extend from the central channel 9 along the more or less spirally wound path. The channels 4 may extend to the periphery 12 or may not extend to the periphery 12 of the blank and comprise a dead end 13 at a radius r which is between 40 and 90 %, in the present example approximately 70%, of the radius R defined by the periphery 12 of the blank.

The radial position of the dead end 13 may vary in a range from between 40% to 90% of the outer diameter R. Even though in general not yet provided in the blank, chip flutes 5 are shown in full drawn lines and it is to be seen that the chip flutes 5 intersect with the channels 4 such that the dead ends 13 are removed and the channels 4 comprise an exit opening at the bottom of the respective chip flute 5. Any cooling or lubricating fluid may thus be ejected towards the work piece immediately adjacent the corresponding cutting edge or may also be directed to the cutting edge and the rake face adjacent thereto.

While not shown in figure 3, there might be provided additional channels 4 as blind holes which would not be opened because they would not intersect a corresponding chip flute 5, because their dead ends 13 would occur at a position between adjacent chip flutes.

Still, with a larger number of chip flutes, such as eight (having a narrower width than the chip flutes 5 as shown in figure 3) it would be possible to have also such additional channels 4 intersecting with the corresponding additional chip flutes, for instance in a milling cutter having eight peripheral cutting edges and correspondingly eight chip flutes 5. Accordingly, the corresponding blanks could be produced in a manner such as to be used for different types of milling cutters basically having the same diameter but different numbers of chip flutes and cutting edges.

With regard to the embodiment shown in figure 2, it may be noted that the radial channels provided at the interface between the first and second green body, should have channels 4 which are slightly rotated with respect to each other about the axis 20, such as to exit in the spirally wound chip flute 5 at equivalent positions.

The principle shown and described with respect to figure 2 would also apply for even more green bodies and a larger number of corresponding interfaces, each interface comprising the channels 4 which are formed and in particular milled or pressed into at least one of the connecting surfaces.

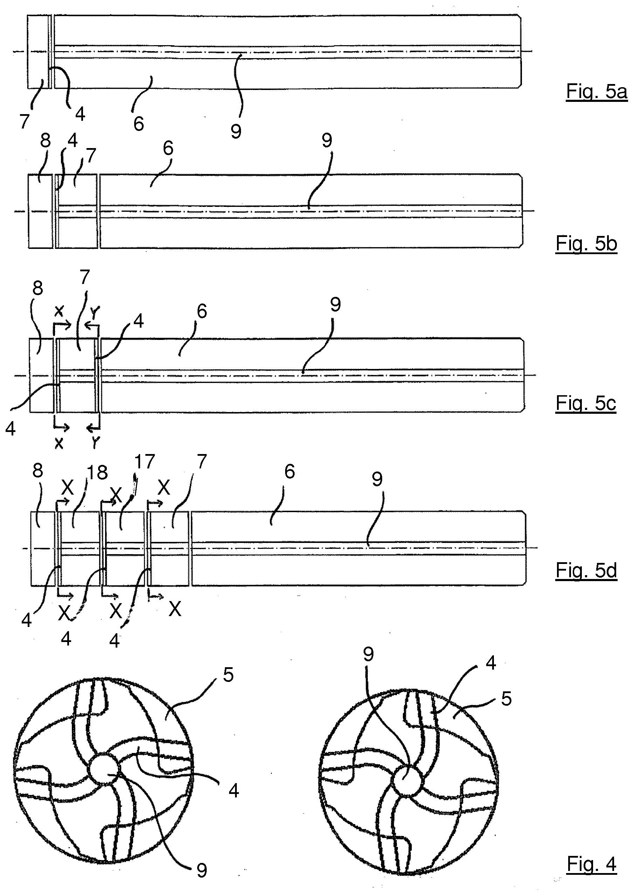

In another embodiment according to figure 4, the channels 4 would extend radially up to the periphery of the blank, while any other features of the channels would be the same as described in connection with the embodiments of figures 1 to 3. With such an embodiment, the channels 4 or better to say their exit openings would be visible on the periphery 12 of the cutting portion 2.

Figure 5a to 5d show four additional embodiments, wherein the cross section along the lines X-X may be the same as shown in figure 4 for all the embodiments of figures 5a to 5d.

Figure 5a corresponds to the embodiment shown in figure 1 with the exception that the channels are not formed as blind holes but extend up to the periphery of the blank. The embodiment of figure 5c corresponds to the embodiment shown in figure 2 again with the exception that the channels 4 extend up to the periphery of the blank.

The embodiment shown in figure 5b is almost the same as the embodiment of figure 5c, wherein still the blank 10 is formed of three green or presintered bodies 6, 7 and 8, even though no channels 4 are provided at the interface between the green, or preferably presintered bodies 6 and 7. The presintering has the advantage that the three bodies 6, 7 and 8 may have a different hard metal composition and are selected and designed for their individual properties.

The embodiment according to figure 5d shows that the concept of forming optionally presintered green bodies to be sintered or fused together after radially extending channels have been formed in at least some of the connecting surfaces, may be extended to even a larger number of green bodies such as five green bodies 6, 7, 8, 17, and 18 in the example of figure 5d which in that case would allow the formation of radial channels in each individual chip flute at three or even four different axial positions, in order to provide the cooling/lubricating fluid along a greater length of the cutting portion, which may relevant in particular for applications in which deep groves are formed by means of a shaft milling cutter.

## Claims

1. A method of producing a blank (10) for a shaft milling tool comprising a generally cylindrical body of solid carbide, the blank having a rear portion (1) and a front portion (2), the periphery of which front portion (2) being designed for chip flutes to be formed therein, said method comprising:
a) providing a first green body (1,6) including the rear portion (1) and a first part (6) of the front portion (2) axially adjacent the rear portion and having at least one axially extending inner channel (9) extending at least through the first part (6) of the front portion (2);
b) providing a second green body including a second part (7) of the front portion (2) axially adjacent the first part (6);
c) said first (6) and second parts (7) of the front portion (2) each comprising a connecting surface (15, 16) defining a common interface; **characterized in**
d) forming at least one generally radially extending channel (4) in at least one of the said connecting surfaces (15, 16), said channel (4) having a radially inner end configured for fluid communication with said axial channel (9), the radial channel (4) extending towards the periphery of the tool at least up to a radial position corresponding to 40% of the outer radius (R) of the blank, wherein the radial channel is formed such as to extend along a not straight path including at least one angled or curved section;
e) sintering the first green body and said second green body together to form a unitary blank (10) of sintered carbide.

2. The method of claim 1, comprising the following further features in addition to steps a) - d) of claim1 :
f) providing the second green body with a third connecting surface on the side facing away from the first green body
g) providing a third green body including a third part (8) of the front portion (2) axially adjacent the second part and having a fourth connecting surface facing towards the second green body,
h) the third and fourth connecting surfaces forming a common interface when fitted together,
d1) forming at least one generally radially extending channel (4) in at least one of the third and fourth connecting surfaces, said channel (4) having a radially inner end configured for fluid communication with said axial channel, the radial channel (4) extending towards the periphery of the tool at least up to a radial position corresponding 40% of the outer radius (R) of the blank
e1) sintering the first, second and third green bodies together to form a unitary blank of sintered carbide.

3. Method according to any of the preceding claims, wherein at least one of the green bodies is presintered before forming a radial channel into a connecting surface thereof.

4. Method according to any of the preceding claims, wherein the at least one generally radially extending channel is formed by pressing or milling a groove into one or both of the connecting surfaces of the respective green body.

5. Method according to any of the preceding claims, wherein the channel is formed in only one of the connecting surfaces forming a common interface.

6. Method according to any of the preceding claims, wherein the at least one radially extending channel is formed with its radially outer end arranged at a distance (r) from a central axis defined by the cylindrical body which distance (r) falls within a range from between 40% and 85%.of the body radius (R).

7. Method according to any of the preceding claims, wherein the number of radial channels formed in a connecting surface is at least two.

8. Method according to any of the preceding claims, wherein the number of radial channels formed in a connecting surface is at least four.

9. Method according to any of claim 4 to 5, wherein the channels (4) in a connecting surface are formed at equal angular distances.

10. Method according to any of the preceding claims, wherein at least two separate axial channels are provided, at least one of which is formed off center and wherein each axially extending channel is connected to different radially extending channels.

11. Method according to any of the preceding claims, wherein the connecting surfaces are formed as planar radial surfaces extending perpendicular to the axis defined by the cylindrical body.

12. Method according to any of the preceding claims, wherein the connecting surfaces are formed as rotationally symmetric mating surfaces extending rotationally symmetric with respect to the axis defined by the cylindrical body.

13. Blank for a shaft milling tool comprising a generally cylindrical body of sintered carbide, the blank having a rear portion and a front portion, in the periphery of which front portion chip spaces are to be formed, the blank comprising at least one axially extending channel (9) and at least one generally radially extending channel (4) in fluid communication with the at least one axially extending channel, **characterized in that** the blank is produced by a method according to any of the preceding claims, wherein the at least one radially extending channel (4) runs along a not straight path including at least one angled or curved section, extends towards the periphery of the tool at least up to a radial position corresponding to 40% of the outer radius (R) of the blank, and has a non-circular cross section.

## Patentansprüche

1. Verfahren zur Herstellung eines Rohlings (10) für ein Schaftfräswerkzeug mit einem im Wesentlichen zylindrischen Körper aus massivem Hartmetall, wobei der Rohling einen hinteren Abschnitt (1) und einen vorderen Abschnitt (2) aufweist, wobei die Peripherie des vorderen Abschnitts (2) so gestaltet ist, dass darin Spannuten ausgebildet sind, wobei das Verfahren Folgendes umfasst:
a) Bereitstellen eines ersten Grünkörpers (1, 6), einschließlich des hinteren Abschnitts (1) und eines zu dem hinteren Abschnitt axial benachbarten ersten Teils (6) des vorderen Abschnitts (2) und wenigstens einen sich axial erstreckenden inneren Kanal (9) aufweisend, der sich wenigstens durch den ersten Teil (6) des vorderen Abschnitts (2) erstreckt,
b) Bereitstellen eines zweiten Grünkörpers einschließlich eines zweiten Teils (7) des vorderen Abschnitts (2), der zu dem ersten Teil (6) axial benachbart ist,
c) wobei der erste (6) und der zweite Teil (7) des vorderen Abschnitts (2) jeweils eine Verbindungsfläche (15, 16) aufweisen, die einen gemeinsamen Übergangsbereich definieren, **dadurch gekennzeichnet, dass** das Verfahren weiterhin Folgendes aufweist
d) Ausbilden wenigstens eines sich im Wesentlichen radial erstreckenden Kanals (4) in wenigstens einer der Verbindungsflächen (15, 16), wobei der Kanal (4) ein radial inneres Ende aufweist, das für die Fluidkommunikation mit dem axialen Kanal (9) eingerichtet ist, wobei der radiale Kanal (4) sich in Richtung der Peripherie des Werkzeugs wenigstens bis zu einer radialen Position, die 40 % des äußeren Radius (R) des Rohlings entspricht, erstreckt, wobei der radiale Kanal so ausgebildet ist, dass er sich entlang eines nicht geraden Pfads, der wenigstens einen abgewinkelten oder gekrümmten Abschnitt aufweist, erstreckt,
e) gemeinsames Sintern des ersten Grünkörpers und des zweiten Grünkörpers, um einen einheitlichen Rohling (10) von gesintertem Hartmetall auszubilden.

2. Verfahren nach Anspruch 1, welches zusätzlich zu den Schritten a) bis d) von Anspruch 1 die folgenden weiteren Merkmale aufweist:
f) Bereitstellen des zweiten Grünkörpers mit einer dritten Verbindungsfläche auf der Seite, die von dem ersten Grünkörper weg weist,
g) Bereitstellen eines dritten Grünkörpers, einschließlich eines zu dem zweiten Teil axial benachbart dritten Teils (8) des vorderen Abschnitts (2) und mit einer vierten Verbindungsfläche, die zu dem zweiten Grünkörper hin weist,
h) wobei die dritte und vierte Verbindungsfläche einen gemeinsamen Übergangsbereich ausbilden, wenn sie zusammengefügt werden,
d1) Ausbilden von wenigstens einem im Wesentlichen sich radial erstreckenden Kanal (4) in wenigstens einer der dritten und vierten Verbindungsflächen, wobei der Kanal (4) ein radial inneres Ende aufweist, das für die Fluidkommunikation mit dem axialen Kanal eingerichtet ist, wobei der radiale Kanal (4) sich in Richtung der Peripherie des Werkzeugs wenigstens bis zu einer radialen Position erstreckt, die 40 % des äußeren Radius (R) des Rohlings entspricht,
e1) gemeinsames Sintern des ersten, zweiten und dritten Grünkörpers um einen einheitlichen Rohling aus gesintertem Hartmetall auszubilden.

3. Verfahren nach einem der vorangehenden Ansprüche, wobei wenigstens einer der Grünkörper vorgesintert ist, bevor in einer der Verbindungsflächen davon ein radialer Kanal ausgebildet wird.

4. Verfahren nach einem der vorangehenden Ansprüche, wobei der wenigstens eine im Wesentlichen sich radial erstreckende Kanal dadurch ausgebildet wird, dass eine Nut in eine oder beide der Verbindungsflächen des jeweiligen Grünkörpers gepresst oder gefräst wird.

5. Verfahren nach einem der vorangehenden Ansprüche, wobei der Kanal nur in einer der Verbindungsflächen, die einen gemeinsamen Übergangsbereich bilden, ausgebildet wird.

6. Verfahren nach einem der vorangehenden Ansprüche, wobei der wenigstens eine sich radial erstreckende Kanal so ausgebildet wird, dass dessen radiales äußeres Ende in einem Abstand (r) von einer zentralen Achse, die von dem zylindrischen Körper definiert wird, angeordnet ist, wobei der Abstand (r) in einen Bereich von zwischen 40 % und 85 % des Körperradius (R) fällt.

7. Verfahren nach einem der vorangehenden Ansprüche, wobei die Anzahl der radialen Kanäle, die in einer Verbindungsfläche ausgebildet sind, wenigstens zwei beträgt.

8. Verfahren nach einem der vorangehenden Ansprüche, wobei die Anzahl der radialen Kanäle, die in einer Verbindungsfläche ausgebildet sind, wenigstens vier beträgt.

9. Verfahren nach einem der Ansprüche 4 oder 5, wobei die Kanäle (4) in einer Verbindungsfläche in gleichen Winkelabständen ausgebildet sind.

10. Verfahren nach einem der vorangehenden Ansprüche, wobei wenigstens zwei separate axiale Kanäle bereitgestellt werden, wobei wenigstens einer davon exzentrisch ausgebildet ist, und wobei jeder sich axial erstreckende Kanal mit unterschiedlichen sich radial erstreckenden Kanälen verbunden ist.

11. Verfahren nach einem der vorangehenden Ansprüche, wobei die Verbindungsflächen als planare radiale Flächen ausgebildet sind, die sich senkrecht zu der Achse erstrecken, die durch den zylindrischen Körper definiert ist.

12. Verfahren nach einem der vorangehenden Ansprüche, wobei die Verbindungsflächen als rotationssymmetrisch passende Flächen ausgebildet sind, die sich bezogen auf die Achse, die von dem zylindrischen Körper definiert wird, rotationssymmetrisch erstrecken.

13. Rohling für ein Schaftfräswerkzeug mit einem im Wesentlichen zylindrischen Körper aus gesintertem Hartmetall, wobei der Rohling einen hinteren Abschnitt und einen vorderen Abschnitt aufweist, wobei in der Peripherie des vorderen Abschnitts Spanbereiche auszubilden sind, wobei der Rohling wenigstens einen sich axial erstreckenden Kanal (9) und wenigstens einen im Wesentlichen sich radial erstreckenden Kanal (4) in Fluidkommunikation mit dem wenigstens einen sich axial erstreckenden Kanal aufweist, **dadurch gekennzeichnet, dass** der Rohling nach einem Verfahren nach einem der vorangehenden Ansprüche hergestellt ist, wobei sich der wenigstens eine sich radial erstreckende Kanal (4) entlang eines nicht geraden Pfads, der wenigstens einen abgewinkelten oder gekrümmten Abschnitt aufweist, erstreckt und sich zu der Peripherie des Werkzeugs bis wenigstens zu einer radialen Position erstreckt, die 40 % des äußeren Radius (R) des Rohlings entspricht, und einen nicht kreisförmigen Querschnitt aufweist.

## Revendications

1. Procédé de production d'une ébauche (10) pour un outil de fraisage à arbre comprenant un corps généralement cylindrique de carbure cémenté, l'ébauche présentant une portion arrière (1) et une portion avant (2), la périphérie de la portion avant (2) étant conçue pour y former en son sein des goujures à copeaux, ledit procédé comprenant les étapes consistant à :
a) fournir un premier corps cru (1, 6) incluant la portion arrière (1) et une première partie (6) de la portion avant (2) axialement adjacente à la portion arrière et présentant au moins un canal intérieur s'étendant axialement (9) s'étendant au moins à travers la première partie (6) de la portion avant (2) ;
b) fournir un deuxième corps cru incluant une deuxième partie (7) de la portion avant (2) axialement adjacente à la première partie (6) ;
c) lesdites première (6) et deuxième (7) parties de la portion avant (2) comprenant chacune une surface de liaison (15, 16) définissant une interface commune ; **caractérisé par le fait de**
d) former au moins un canal s'étendant généralement radialement (4) dans au moins une desdites surfaces de liaison (15, 16), ledit canal (4) présentant une extrémité radialement intérieure configurée pour une communication de fluide avec ledit canal axial (9), le canal radial (4) s'étendant en direction de la périphérie de l'outil au moins jusqu'à une position radiale correspondant à 40 % du rayon extérieur (R) de l'ébauche, où le canal radial est formé de sorte à s'étendre le long d'une trajectoire non rectiligne incluant au une section coudée ou incurvée ;
e) fritter le premier corps cru et ledit deuxième corps cru ensemble pour former une ébauche unitaire (10) de carbure fritté.

2. Procédé selon la revendication 1, comprenant les autres caractéristiques suivantes en plus des étapes a) à d) de la revendication 1 :
f) doter le deuxième corps cru d'une troisième surface de liaison sur le côté orienté vers l'opposé du premier corps cru
g) fournir un troisième corps cru incluant une troisième partie (8) de la portion avant (2) axialement adjacente à la deuxième partie et présentant une quatrième surface de liaison faisant face au deuxième corps cru,
h) les troisième et quatrième surfaces de liaison formant une interface commune lorsqu'elles sont assemblées ensemble,
d1) former au moins un canal s'étendant généralement radialement (4) dans au moins une des troisième et quatrième surfaces de liaison, ledit canal (4) présentant une extrémité radialement intérieure configurée pour une communication de fluide avec ledit canal axial, le canal radial (4) s'étendant en direction de la périphérie de l'outil au moins jusqu'à une position radiale correspondant à 40 % du rayon extérieur (R) de l'ébauche
e1) fritter les premier, deuxième et troisième corps crus ensemble pour former une ébauche unitaire de carbure fritté.

3. Procédé selon l'une quelconque des revendications précédentes, dans lequel au moins un des corps crus est préfritté avant de former un canal radial dans une surface de liaison de celui-ci.

4. Procédé selon l'une quelconque des revendications précédentes, dans lequel le au moins un canal s'étendant généralement radialement est formé par façonnage à la presse ou par fraisage d'une rainure dans une ou les deux surfaces de liaison du corps cru respectif.

5. Procédé selon l'une quelconque des revendications précédentes, dans lequel le canal est formé dans uniquement une des surfaces de liaison formant une interface commune.

6. Procédé selon l'une quelconque des revendications précédentes, dans lequel le au moins un canal s'étendant radialement est formé avec son extrémité radialement extérieure agencée à une distance (r) d'un axe central défini par le corps cylindrique, laquelle distance (r) se situe dans une plage comprise entre 40 % et 85 % du rayon de corps (R).

7. Procédé selon l'une quelconque des revendications précédentes, dans lequel le nombre de canaux radiaux formés dans une surface de liaison est d'au moins deux.

8. Procédé selon l'une quelconque des revendications précédentes, dans lequel le nombre de canaux radiaux formés dans une surface de liaison est d'au moins quatre.

9. Procédé selon l'une quelconque des revendications 4 et 5, dans lequel les canaux (4) dans une surface de liaison sont formés à égales distances angulaires.

10. Procédé selon l'une quelconque des revendications précédentes, dans lequel au moins deux canaux axiaux distincts sont ménagés, dont au moins un est formé de manière décentrée et où chaque canal s'étendant axialement est relié à différents canaux s'étendant radialement.

11. Procédé selon l'une quelconque des revendications précédentes, dans lequel les surfaces de liaison sont formées sous le forme de surfaces radiales planes s'étendant perpendiculairement à l'axe défini par le corps cylindrique.

12. Procédé selon l'une quelconque des revendications précédentes, dans lequel les surfaces de liaison sont formées sous le forme de surfaces d'accouplement symétriques par rotation s'étendant de manière symétrique par rotation par rapport à l'axe défini par le corps cylindrique.

13. Ebauche pour un outil de fraisage à arbre comprenant un corps généralement cylindrique de carbure cémenté, l'ébauche présentant une portion arrière et une portion avant, des espaces à copeaux étant destinés à être formés dans la périphérie de la portion avant, l'ébauche comprenant au moins un canal s'étendant axialement (9) et au moins un canal s'étendant généralement radialement (4) en communication de fluide avec le au moins un canal s'étendant axialement, **caractérisée en ce que** l'ébauche est produite par un procédé selon l'une quelconque des revendications précédentes, où le au moins un canal s'étendant radialement (4) s'étend le long d'une trajectoire non rectiligne incluant au moins une section coudée ou incurvée, s'étend en direction de la périphérie de l'outil au moins jusqu'à une position radiale correspondant à 40 % du rayon extérieur (R) de l'ébauche, et présente une section transversale non circulaire.
